# EUROPÄISCHE PATENTSCHRIFT

(11) **EP 2 385 003 B1**
(45) Veröffentlichungstag und Bekanntmachung des Hinweises auf die Patenterteilung: **22.08.2012**
(21) Anmeldenummer: 10004060.9
(22) Anmeldetag: 16.04.2010
(51) Int. Cl.: B65G 21/14, B65G 41/00, E01C 19/48

(54) **Fördervorrichtung**
Conveying device
Dispositif d'acheminement

(43) Veröffentlichungstag der Anmeldung: 09.11.2011
(73) Patentinhaber: Joseph Vögele AG, 67067 Ludwigshafen (DE)
(72) Erfinder: Fickeisen, Steffen, 67098 Bad Dürkeim (DE); Neumann, Joschka, 68199 Mannheim (DE)
(74) Vertreter: Grünecker, Kinkeldey, Stockmair & Schwanhäusser

(56) Entgegenhaltungen:
- WO-A2-2007/021196
- DE-A1- 19 810 987
- DE-U1- 29 812 115
- US-A1- 2003 183 493

## Beschreibung

Die vorliegende Erfindung bezieht sich auf eine Fördervorrichtung gemäß dem Oberbegriff des Anspruchs 1. Insbesondere handelt es sich dabei um eine Fördervorrichtung an oder auf einer Baumaschine, um von der Baumaschine zu verarbeitendes Material zu fördern. Bei der Baumaschine kann es sich beispielsweise um eine Straßenfräse handeln, die einen zu ersetzenden Straßenbelag abfräst. Dieser Straßenbelag wird dann mittels der Fördervorrichtung abtransportiert. Bei der Baumaschine kann es sich auch um einen Straßenfertiger oder um einen Beschicker für einen Straßenfertiger handeln. Das transportierte Material ist dann Einbaumischgut, das zur Herstellung von Verkehrs-Flächenbefestigungen eingesetzt wird.

Aus der DE 298 12 115 U1 ist ein Beschicker mit einer Fördervorrichtung bekannt. Die Fördervorrichtung umfasst ein erstes Förderband, das fest auf dem Beschicker installiert ist. Um die Transportlänge zu vergrößern, kann an einem Ausleger hinter dem Beschicker ein zweites Förderband befestigt werden, das vom ersten Förderband bedient wird.

Nachteilig an der herkömmlichen Fördervorrichtung ist, dass es vergleichsweise aufwändig ist, die Förderlänge zu verändern. Zu einer Änderung der Förderlänge muss ein komplexes und schweres Zusatzgerät mit dem zweiten Förderband an den Beschicker angebaut werden.

Aus der US 2003 / 0183493 A1 ist eine Fördervorrichtung gemäß dem Oberbegriff des Anspruchs 1 bekannt. Diese Fördervorrichtung enthält mehrere Rahmenmodule. Die Transportlänge kann durch das Auswechseln eines Moduls geändert werden. Ein anderes Transportband benutzen wird, dessen Länge die gewählte Transportlänge entspricht.

Aufgabe der Erfindung ist es, eine herkömmliche Fördervorrichtung mit konstruktiv möglichst einfachen Mitteln dahingehend zu verbessern, dass der Zeit- und Arbeitsaufwand zum Ändern der Länge der Fördervorrichtung verringert wird.

Diese Aufgabe wird gelöst durch eine Fördervorrichtung mit den Merkmalen des Anspruchs 1. Vorteilhafte Weiterbildungen der Erfindung sind in den Unteransprüchen angegeben.

Bei der erfindungsgemäßen Fördervorrichtung ist der Rahmen, der die Umlenkelemente für das Förderband trägt, aus mehreren Rahmenmodulen zusammengesetzt, wobei mindest eines der Rahmenmodule auswechselbar ist, um die Länge der Fördervorrichtung zu ändern. Bei der Erfindung genügt es, ein oder mehrere Rahmenmodule des Rahmens der Fördervorrichtung auszutauschen, um die Länge der Fördervorrichtung zu ändern. Das auswechselbare Rahmenmodul beziehungsweise die auswechselbaren Rahmenmodule sind lösbar an dem oder den benachbarten Rahmenmodulen befestigt.

Bei der Erfindung liegt ein Satz beziehungsweise eine Gruppe von gegeneinander auswechselbaren Rahmenmodulen vor, mit denen die Länge der Fördervorrichtung veränderbar ist, ohne die Länge des Förderbandes dabei zu verändern. Dies bietet den Vorteil, dass lediglich die Rahmenmodule ausgewechselt werden müssen, ohne gleichzeitig das Förderband austauschen zu müssen. Beispielsweise kann jedes Modul aus dem Satz von Rahmenmodulen eine interne Umlenkstrecke für das Förderband aufweisen, so dass die effektive Länge des Förderbandes innerhalb jedes der gegeneinander auswechselbaren Rahmenmodule gleich ist.

Der Vorteil der Erfindung liegt darin, dass zum Ändern der Länge der Fördervorrichtung nicht mehr ein zusätzliches Förderband an- oder abgebaut werden oder ein vollständiges Förderband durch ein kürzeres oder längeres Förderband ersetzt werden muss.

Vorzugsweise ist ein Rahmenmodul am vorderen Ende der Fördervorrichtung (d.h. am Aufnahmepunkt der Fördervorrichtung), am hinteren Ende der Fördervorrichtung (d.h. am Abgabepunkt der Fördervorrichtung) und/oder in einem mittleren Abschnitt der Fördervorrichtung auswechselbar. Besonders günstig ist dabei die Möglichkeit zum Auswechseln eines Rahmenmoduls am hinteren Ende der Fördervorrichtung, da dieses hintere Ende üblicherweise besonders leicht zugänglich ist.

Denkbar ist es, dass nicht nur ein Rahmenmodul, sondern mehrere Rahmenmodule der Fördervorrichtung auswechselbar sind. Dadurch stehen mehr Möglichkeiten zum Einstellen der Länge der Fördervorrichtung zur Verfügung und/oder es kann eine größere Längenänderung realisiert werden.

Eine stabile Verwendung zweier Rahmenmodule lässt sich erzielen, indem zwei benachbarte Rahmenmodule mittels einer Flanschverbindung miteinander verbindbar sind.

Die erfindungsgemäße Fördervorrichtung kann an einem Straßenfertiger oder an einem Beschicker für einen Straßenfertiger montiert sein.

Zweckmäßig ist es, wenn ein Grundrahmenmodul der Fördervorrichtung dauerhaft an dem Straßenfertiger oder dem Beschicker befestigt ist. Dieses Grundrahmenmodul kann eine stabile Basis der Fördervorrichtung bilden. Auch der Antrieb des Förderbandes, beispielsweise ein Antrieb für eine Umlenkrolle, kann dauerhaft an dem Straßenfertiger beziehungsweise an der die Fördervorrichtung tragenden Baumaschine befestigt sein.

Im Folgenden wird ein vorteilhaftes Ausführungsbeispiel der Erfindung anhand einer Zeichnung näher erläutert. Im Einzelnen zeigen
- Figur 1: einen Beschicker mit einer herkömmlichen Fördervorrichtung,
- Figur 2: einen Beschicker mit einer erfindungsgemäßen Fördervorrichtung, und
- Figur 3: eine perspektivische Ansicht der Flanschverbindung.

Gleiche Komponenten sind in den Figuren durchgängig mit gleichen Bezugszeichen versehen.

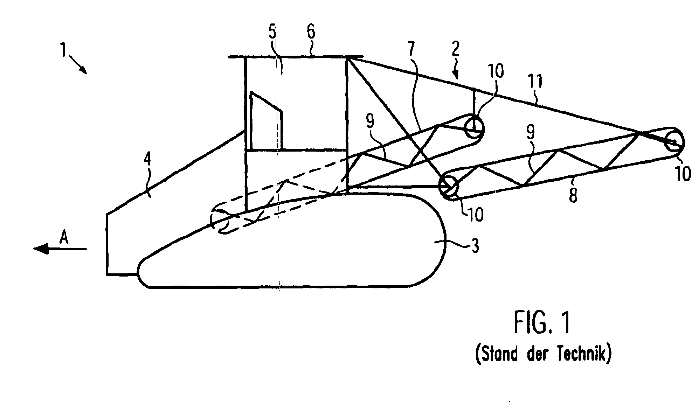

Figur 1 zeigt eine Baumaschine 1, insbesondere einen Beschicker für einen Straßenfertiger, mit einer herkömmlichen Fördervorrichtung 2. Der Beschicker 1 umfasst ein Fahrwerk 3, insbesondere ein Kettenfahrwerk. Ein Gutbunker 4 an dem in Arbeitsrichtung A vorderen Ende des Beschickers 1 dient zur Aufnahme und zum Speichern von Einbaumischgut, beispielsweise Beton oder heißem, bituminösem Einbaumischgut. Von einem Steuerstand 5 aus wird der Beschicker 1 bedient und gefahren. Der Steuerstand 5 ist durch ein Dach 6 geschützt.

Die Fördervorrichtung 2 umfasst ein erstes Förderband 7 und ein zweites Förderband 8. Sie umfasst ferner für jedes der beiden Förderbänder einen Rahmen 9, der Umlenkelemente, insbesondere Umlenkrollen 10 trägt, um die das Förderband 7, 8 umgelenkt ist. Jeweils eine der Umlenkrollen 10 für jedes Förderband 7, 8 ist angetrieben, um das Förderband 7, 8 zu bewegen.

Das erste Förderband 7 beginnt mit seinem vorderen Ende im Gutbunker 4, um von dort das Material aufzunehmen. Das Ende beziehungsweise der Abgabepunkt des ersten Förderbandes 7 liegt oberhalb des Aufnahmepunktes beziehungsweise des Vorderendes des zweiten Förderbandes 8. Der Rahmen 9 des zweiten Förderbandes 8 ist über einen oder mehrere Ausleger 11 am Maschinenkörper der Baumaschine 1 abgestützt.

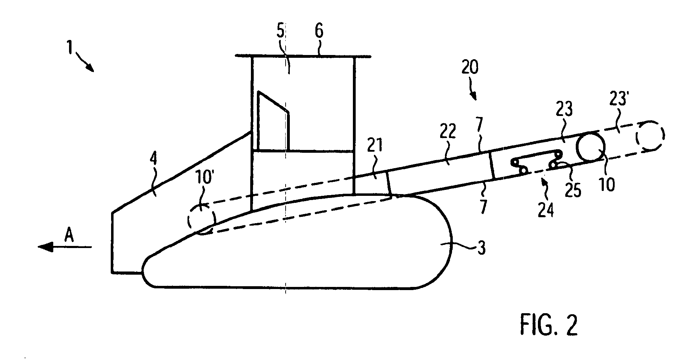

Figur 2 zeigt den gleichen Beschicker 1 wie in Figur 1, nun jedoch mit einer erfindungsgemäßen Fördervorrichtung 20. Die Fördervorrichtung 20 umfasst ebenfalls ein Förderband 7. Sie unterscheidet sich jedoch von der in Figur 1 gezeigten Fördervorrichtung 2 dadurch, dass sich der Rahmen 9 der Fördervorrichtung aus mehreren Modulen 21, 22, 23 zusammensetzt, nämlich einem vorderen Rahmenmodul 21, einem mittleren Rahmenmodul 22 und einem hinteren Rahmenmodul 23.

Das vordere Rahmenmodul 21 kann als Grundrahmenmodul dauerhaft an der Baumaschine 1 befestigt sein. Es trägt die vordere Umlenkrolle 10', über die das Förderband 7 angetrieben wird.

Sowohl das mittlere Rahmenmodul 22, als auch das hintere Rahmenmodul 23 sind lösbar aneinander sowie am ersten Rahmenmodul 21 befestigt, sie können ausgetauscht werden, um durch ein kürzeres oder längeres Rahmenmodul 22, 23 ersetzt zu werden.

Mit durchgezogenen Linien ist ein erstes hinteres Rahmenmodul 23 gezeigt. Es umfasst eine Umlenkeinrichtung 24 mit mehreren Umlenkrollen 25, um eine Überlänge des Förderbandes 7 aufzunehmen. Die Umlenkeinrichtung 24 kann gleichzeitig zum Spannen des Förderbandes 7 dienen.

Das hintere Rahmenmodul 23 kann ausgetauscht werden gegen ein längeres hinteres Rahmenmodul 23', das strichliert gezeichnet ist. Bei dem längeren hinteren Rahmenmodul 23' ist die Lage der hinteren Umlenkrolle 10 weiter nach hinten versetzt. Die vorher in der Umlenkeinrichtung 24 aufgenommene Überlänge des Förderbandes 7 wird nun verwendet, um das Förderband auch um die nach weiter nach hinten versetzte hintere Umlenkrolle 10 führen zu können. Das längere Rahmenmodul 23' kommt daher ohne eine zusätzliche Umlenkeinrichtung 24 aus, da das Förderband 7 nun keine Überlänge mehr hat.

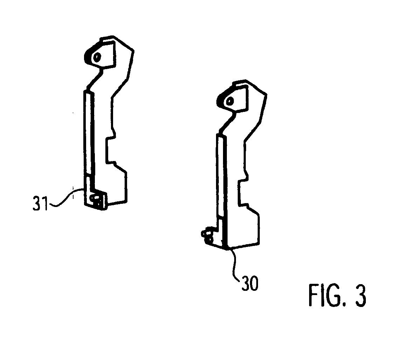

Figur 3 zeigt einen rechten Flansch 30 und einen linken Flansch 31. Diese Flansche sind an den einander zugewandten Enden der jeweiligen Rahmenmodule 21, 22, 23 befestigt. Sie dienen dazu, die Rahmenmodule lösbar aneinander zu befestigen.

Ausgehend von dem dargestellten Ausführungsbeispiel kann die erfindungsgemäße Fördervorrichtung auf vielfache Weise geändert werden. Beispielsweise ist es denkbar, auch das vordere Rahmenmodul 21 auswechseln zu können. Zudem kann es möglich sein, weitere Rahmenmodule in die Fördervorrichtung 20 einzusetzen, so dass sich der Rahmen 9 aus mehr als drei Modulen zusammensetzt.

## Patentansprüche

1. Fördervorrichtung (20), wobei die Fördervorrichtung (20) einen Rahmen (9), durch den Rahmen (9) getragene Umlenkelemente (10) und ein um die Umlenkelemente (10) geführtes Förderband (7, 8) aufweist, wobei der Rahmen (9) aus mehreren Rahmenmodulen (21, 22, 23) zusammengesetzt ist, und wobei mindestens eines der Rahmenmodule (21, 22, 23) auswechselbar ist, um die Länge der Fördervorrichtung (20) zu ändern, **dadurch gekennzeichnet, dass** ein Satz von gegeneinander auswechselbaren Rahmenmodulen (21, 22, 23) vorliegt, mit denen die Länge der Fördervorrichtung (20) veränderbar ist, ohne die Länge des Förderbandes (7) zu verändern, indem ein kürzeres Rahmenmodul (23) eine Umlenkeinrichtung (24) zur Aufnahme einer Überlänge des Förderbandes (7, 8) aufweist und ein längeres Rahmenmodul (23') ohne eine solche Umlenkeinrichtung (24) gegen das kürzere Rahmenmodul (23) austauschbar ist.

2. Fördervorrichtung nach Anspruch 1, **dadurch gekennzeichnet, dass** ein Rahmenmodul (21, 22, 23) am vorderen Ende der Fördervorrichtung (20), am hinteren Ende der Fördervorrichtung (20) und/oder in einem mittleren Abschnitt der Fördervorrichtung (20) auswechselbar ist.

3. Fördervorrichtung nach einem der vorangehenden Ansprüche, **dadurch gekennzeichnet, dass** mehrere Rahmenmodule (21, 22, 23) auswechselbar sind.

4. Fördervorrichtung nach einem der vorangehenden Ansprüche, **dadurch gekennzeichnet, dass** zwei benachbarte Rahmenmodule (21, 22, 23) mittels einer Flanschverbindung miteinander verbindbar sind.

5. Fördervorrichtung nach einem der vorangehenden Ansprüche, **dadurch gekennzeichnet, dass** die Fördervorrichtung (20) an einem Straßenfertiger oder einem Beschicker (1) montiert ist.

6. Fördervorrichtung nach Anspruch 5, **dadurch gekennzeichnet, dass** ein Grundrahmenmodul (21) der Fördervorrichtung (2) dauerhaft an dem Straßenfertiger oder dem Beschicker (1) befestigt ist.

7. Fördervorrichtung nach einem der vorangehenden Ansprüche, **dadurch gekennzeichnet, dass** die Umlenkeinrichtung (24) mehrere Umlenkrollen (25) zur Aufnahme der Überlänge des Förderbandes (7) aufweist.

8. Fördervorrichtung nach einem der vorangehenden Ansprüche, **dadurch gekennzeichnet, dass** die Umlenkeinrichtung (24) gleichzeitig zum Spannen des Förderbandes (7) ausgebildet ist.

## Claims

1. Conveyor device (20), wherein the conveyor device (20) comprises a frame (9), deflecting elements (10) supported by the frame (9), and a conveyor belt (7, 8) guided around the deflecting elements (10), wherein the frame (9) is composed of a plurality of frame modules (21, 22, 23), and wherein at least one of the frame modules (21, 22, 23) is exchangeable in order to vary the length of the conveyor device (20), **characterised in that** a set of interchangeable frame modules (21, 22, 23) is provided, by means of which the length of the conveyor device (20) can be varied without varying the length of the conveyor belt (7) due to the fact that a shorter frame module (23) has a deflecting device (24) for taking up an excess length of the conveyor belt (7, 8) and a longer frame module (23') without such a deflecting device (24) can be exchanged for the shorter frame module (23).

2. Conveyor device according to claim 1, **characterised in that** a frame module (21, 22, 23) at the front end of the conveyor device (20), at the rear end of the conveyor device (20) and/or in a middle section of the conveyor device (20) is exchangeable.

3. Conveyor device according to one of the preceding claims, **characterised in that** a plurality of frame modules (21, 22, 23) are exchangeable.

4. Conveyor device according to one of the preceding claims, **characterised in that** two adjacent frame modules (21, 22, 23) can be connected to one another by means of a flange connection.

5. Conveyor device according to one of the preceding claims, **characterised in that** the conveyor device (20) is mounted on a road finishing machine or feeder (1).

6. Conveyor device according to claim 5, **characterised in that** a basic frame module (21) of the conveyor device (20) is permanently attached to the road finishing machine or feeder (1).

7. Conveyor device according to one of the preceding claims, **characterised in that** the deflecting device (24) comprises a plurality of deflecting rollers (25) for taking up the excess length of the conveyor belt (7).

8. Conveyor device according to one of the preceding claims, **characterised in that** the deflecting device (24) is at the same time designed to tension the conveyor belt (7).

## Revendications

1. Dispositif d'acheminement (20), étant précisé que le dispositif d'acheminement (20) comporte un châssis (9), des éléments de renvoi (10) qui sont portés par le châssis (9), et une bande d'acheminement (7, 8) qui passe sur les éléments de renvoi (10), que le châssis (9) se compose de plusieurs modules de châssis (21, 22, 23), et que l'un au moins des modules de châssis (21, 22, 23) est échangeable afin de modifier la longueur du dispositif d'acheminement (20), **caractérisé en ce qu'**il est prévu un jeu de modules de châssis (21, 22, 23) interchangeables grâce auxquels la longueur du dispositif d'acheminement (20) est apte à être modifiée sans modifier la longueur de la bande d'acheminement (7), grâce au fait qu'un module de châssis plus court (23) comporte un dispositif de renvoi (24) pour recevoir une surlongueur de la bande d'acheminement (7, 8), et qu'un module de châssis plus long (23') sans dispositif de renvoi (24) de ce type est apte à être échangé contre le module de châssis plus court (23).

2. Dispositif d'acheminement selon la revendication 1, **caractérisé en ce qu'**un module de châssis (21, 22, 23) situé à l'extrémité avant du dispositif d'acheminement (20), à l'extrémité arrière du dispositif d'acheminement (20) et/ou dans une section centrale du dispositif d'acheminement (20) est échangeable.

3. Dispositif d'acheminement selon l'une des revendications précédentes, **caractérisé en ce que** plusieurs modules de châssis (21, 22, 23) sont échangeables.

4. Dispositif d'acheminement selon l'une des revendications précédentes, **caractérisé en ce que** deux modules de châssis (21, 22, 23) voisins sont aptes à être reliés entre eux à l'aide d'une liaison par bridage.

5. Dispositif d'acheminement selon l'une des revendications précédentes, **caractérisé en ce que** le dispositif d'acheminement (20) est monté sur une finisseuse de routes ou une chargeuse (1).

6. Dispositif d'acheminement selon la revendication 5, **caractérisé en ce qu'**un module de châssis de base (21) du dispositif d'acheminement (20) est fixé à demeure à la finisseuse de routes ou à la chargeuse (1).

7. Dispositif d'acheminement selon l'une des revendications précédentes, **caractérisé en ce que** le dispositif de renvoi (24) comporte plusieurs poulies de renvoi (25) pour recevoir la surlongueur de la bande d'acheminement (7).

8. Dispositif d'acheminement selon l'une des revendications précédentes, **caractérisé en ce que** le dispositif de renvoi (24) est conçu en même temps pour tendre la bande d'acheminement (7).
